# EUROPEAN PATENT SPECIFICATION

(11) **EP 3 551 125 B1**
(45) Date of publication and mention of the grant of the patent: **16.08.2023**
(21) Application number: 17878427.8
(22) Date of filing: 30.11.2017
(51) Int. Cl.: A61C 13/20, A61C 5/73, A61C 5/77, A61C 9/00, A61C 13/00

(54) **DENTAL PROSTHETIC MOULDS AND MOULDING METHODS**
FORMEN FÜR ZAHNPROTHESEN UND FORMVERFAHREN
MOULES PROTHÉTIQUES DENTAIRES ET PROCÉDÉS DE MOULAGE

(30) Priority: 08.12.2016 AU 2016269528
(43) Date of publication of application: 16.10.2019
(73) Proprietor: Fung, John, Chatswood, NSW 2067 (AU)
(72) Inventor: Fung, John, Chatswood, NSW 2067 (AU)
(74) Representative: AWA Sweden AB
(86) International application number: PCT/AU2017/051319
(87) International publication number: WO 2018/102862

(56) References cited:
- EP-A1- 2 532 322
- WO-A1-2011/041194
- WO-A1-2016/011495
- WO-A2-2014/138643
- US-A1- 2012 065 756
- US-A1- 2016 100 917

## Description

### Technical Field

The present disclosure relates to dental prosthetics including prosthetic tooth elements.

### Background

A dental prosthesis such as a crown or bridge provides an artificial tooth structure that is designed to replace all or part of one or more teeth that have been partially or wholly lost, e.g., through decay or other damage. The dental prosthesis is secured to a mount in the mouth such as a dental implant or part of one or more existing teeth.

A dental prosthesis is typically formed from a block of solid dental ceramic such as zirconia, which is milled to the desired shape to form a ceramic, prosthetic tooth element. A porcelain veneer is provided over the surface of the prosthetic tooth element to arrive at a dental prosthesis having a desired size, shape and colour. Related background art can be found in WO 2011/041194 A1 and in EP 2 532 322 A1.

### Summary

2. As for the general understanding of the technical field, the present disclosure provides a method of forming a plurality of compression moulds for moulding prosthetic tooth elements comprising:
forming a first compression mould comprising a first mould surface, the first mould surface having a shape corresponding to a shape of a natural tooth surface increased in size by a first scale factor; and
forming a second compression mould comprising a second mould surface, the second mould surface having a shape corresponding to the shape of the natural tooth surface increased in size by a second scale factor, the second scale factor being different from the first scale factor.

The invention is defined by a method of forming a plurality of compression moulds for moulding prosthetic tooth elements with the features of claim 1. Preferred embodiments of the invention are defined in the dependent claims.

According to the invention, a the present disclosure provides a method of forming a plurality of compression moulds for moulding prosthetic tooth elements comprising:
scanning a natural tooth surface or a model of the natural tooth surface to obtain scan data;
based on the scan data, forming a first compression mould comprising a first mould surface, the first mould surface having a shape corresponding to a shape of the natural tooth surface increased in size by a first scale factor; and
based on the scan data, forming a second compression mould comprising a second mould surface, the second mould surface having a shape corresponding to the shape of the natural tooth surface increased in size by a second scale factor, the second scale factor being different from the first scale factor.

The first compression mould may comprise a positive first mould part and a negative first mould part. The first mould surface may be provided on one of the first mould parts, such as the positive first mould part. Similarly, the second compression mould may comprise a positive second mould part and a negative second mould part. The second mould surface may be provided on one of the second mould parts, such as the positive second mould part.

The first and second compression moulds may be comprised in a single mould apparatus. In this arrangement, the first and second positive mould parts may be integrated with each other in a first mould section, and the first and second negative mould parts may be integrated with each other in a second mould section. Alternatively, the first positive mould part and the second negative mould part may be integrated with each other in a first mould section, and the first negative mould part and the second positive mould part may be integrated with each other in a second mould section. The single mould apparatus may be used to form multiple prosthetic tooth components at the same time by the pressing of ceramic material between the first and second mould sections.

The shape of the natural tooth surface is determined from scan data. A physical model is produced, e.g., by obtaining an imprint of the subject's tooth or teeth and casting the physical model from the imprint. The physical model may be scanned to obtain the scan data. The shape of the natural tooth surface may be determined from the scan data. In an alternative the subject's tooth or teeth may be scanned directly to obtain the scan data, without forming any physical model.

The first compression mould may be formed on the basis of a first virtual model that may be created based on the scan data and the first scale factor, and the second compression mould may be formed on the basis of a second virtual model that may be created based on the scan data and the second scale factor.

2. As for the general understanding of the technical field, the present disclosure provides a method for forming a plurality of compression moulds for moulding prosthetic tooth elements comprising:
receiving scan data;
determining the shape of a natural tooth surface based on the scan data:
   forming a first virtual model based on the determined shape and a first scale factor; and
   forming a second virtual model based on the determined shape and a second scale factor, different from the first scale factor;
   the first and second virtual models being for forming respective first and second compression moulds.

Additionally for the general understanding of the technical field , there is provided a machine-readable medium comprising instructions stored therein, which when executed by a processor, causes the processor to perform the method of the immediately preceding aspect.

The first and second compression moulds may be formed directly on the basis of the respective first and second virtual models, e.g. by a 3D printing techniques or otherwise. Alternatively, the first and second compression moulds may be formed indirectly on the basis of the respective first and second virtual models. For example, as an intermediate step to forming the first and second compression moulds, first and second mould patterns may be formed on the basis of the respective first and second virtual models, e.g. by a 3D printing techniques or otherwise. The first and second mould parts may then be formed by applying fluid or deformable mould material, e.g. molten silicone, around all or part of the first and second mould patterns, followed by hardening or fixing of the mould material and separation of the mould material from the mould patterns.

The method may further comprise forming a first prosthetic tooth element from ceramic material using the first compression mould and forming a second prosthetic tooth element from ceramic material using the second compression mould.

Thus, the present disclosure provides a method of forming multiple prosthetic tooth elements using compression moulds formed according to the method claimed.

The first prosthetic tooth element may comprise a first prosthetic surface corresponding to the shape of the first mould surface and the second prosthetic tooth element may comprise a second prosthetic surface corresponding to the shape of the second mould surface. During the forming of the first and second prosthetic tooth elements, the first prosthetic surface and the second prosthetic surface may decrease in size.

In more detail, each prosthetic tooth element may be formed by compression moulding ceramic material (e.g., a powdered ceramic compound or mixture), using the respective compression mould, to provide the prosthetic tooth element in a raw first state, and subsequently firing the raw prosthetic tooth element to provide the prosthetic tooth element in a second (and optionally final) state. In the first state, the prosthetic surface of the prosthetic tooth element can have a shape and size corresponding to the shape and size of the respective mould surface. During the firing process to form the prosthetic tooth element in its second state, however, the decrease in size can occur, e.g. as a result of material shrinkage.

Providing mould surfaces that are increased in size in comparison to the natural tooth surface may therefore be used to compensate, at least partially, for a decrease in size of the prosthetic tooth element that occurs during its forming process, e.g., as a result of ceramic shrinkage during firing.

The first scale factor is selected to match a scale factor by which the prosthetic surface decreases in size during the forming of the first prosthetic tooth element. Accordingly. the first prosthetic tooth element in its final state can be formed to have a prosthetic tooth surface that is substantially identical in shape and size to the natural tooth surface. On the other hand, the second scale factor is different from the first scale factor and will therefore not match the scale factor by which the prosthetic surface decreases in size during the forming of the second prosthetic tooth element. The first and second scale factors may both be selected so that neither scale factor matches the scale factor by which the respective prosthetic surface decreases in size during the forming of the respective prosthetic tooth element.

Thus, in addition to providing a degree of compensation for size reduction during forming, the first and/or second scale factors can be intentionally selected to provide for a prosthetic tooth element with a differently sized prosthetic tooth surface in comparison to the natural tooth surface. Therefore, prosthetic tooth elements can be formed to have a prosthetic tooth surface that is an intentionally smaller reproduction or an intentionally larger reproduction of the natural tooth surface.

The scale factors may be expressed as a percentage size change, and may be selected, for example, from the following list: 130.0%, 130.5%, 131.0%, 131.5%, 132.0%, 132.5%, 133.0%, 133.5%, 134.0%, 134.5%, 135%, 135.5%, 136.0%, 136.5%, 137.0% or otherwise. In one example, the first scale factor may be 133.5% and the second scale factor may be 134.0%. Nevertheless, the appropriate scale factors may depend on a number of different factors such as the properties of the ceramic used, the nature of the firing process and the desired final prosthetic tooth element sizes and relative sizes.

More than two compression moulds, and therefore more than two differently sized prosthetic tooth elements, may be formed using the method. For example, the method further comprises forming third and optionally further compression moulds using the same techniques as described above, but employing different scale factors from the first and second scale factors. The third and any further compression moulds may be obtained from the same scan data and/or model used to form the first and second compression moulds, but with the different respective scale factors being applied. When third or further compression moulds are formed, they may also be combined or integrated with the first and second compression moulds, e.g., into a single mould apparatus, according to the approach described above.

The method may comprise forming a dental prosthesis by applying a veneer to the prosthetic tooth element. For example, a first dental prosthesis may be formed by applying a veneer to the first prosthetic tooth element. Moreover, a second dental prosthesis may be formed by applying a veneer to the second prosthetic tooth element.

The method described herein may be used to form a kit of differently-sized prosthetic tooth elements or of differently sized dental prostheses. The provision of differently-sized prosthetic tooth elements or dental prostheses may provide flexibility to a dentist or clinician to select a prosthetic tooth element or dental prostheses of appropriate configuration for the patient. This may be particularly advantageous if the natural tooth surface on the basis of which the above described mould forming/moulding methods are carried out is not a natural tooth surface belonging to the patient. Nonetheless, even when the natural tooth surface does belong to the patient, the opportunity for the dentist or clinician to select from a plurality of differently-sized prosthetic tooth elements or differently-sized dental prostheses can still be advantageous, e.g., it may help accommodate for manufacturing tolerances and preferred dental practices.

In yet another aspect, the present disclosure provides a kit of dental prostheses moulded using first and second compression moulds formed according to the method claimed.

The ceramic material of the prosthetic tooth element may comprise zirconia, zirconia-oxide, aluminium oxide or other materials usable as dental ceramics.

Each veneer may be a ceramic veneer. The ceramic material of the veneer may comprise zirconia, zirconia-oxide, aluminium oxide or other materials usable as dental ceramics.

Each veneer may be formed by compression moulding ceramic material on top of the respective prosthetic tooth element.

Each compression mould may be formed at least partially from flexible polymeric material. Therefore, when pressure is applied to the mould, vibration or other types of relative motion may occur at the interface between the ceramic and the mould, introducing irregularities and therefore roughness in the surface of the prosthetic tooth element. The roughened surface may provide a favourable surface for bonding of the veneer or other components and materials.

Throughout this specification the word "comprise", or variations such as "comprises" or "comprising", will be understood to imply the inclusion of a stated element, integer or step, or group of elements, integers or steps, but not the exclusion of any other element, integer or step, or group of elements, integers or steps.

### Brief Description of Drawings

By way of example only, elements are now described with reference to the accompanying drawings, in which:
Fig. 1 shows a flow-chart of steps carried out in a method of forming a plurality of compression moulds;
Fig. 2 shows a cross-sectional view of a model of a row of teeth that is scanned in the method of Fig. 1;
Fig. 3 shows a cross-sectional view of a row of teeth that is scanned
Fig. 4 shows a flow-chart of further steps carried out in the method of Fig. 1
Fig. 5 shows scan data obtained in the method of Fig. 1;
Figs. 6a and 6b show first and second virtual models, respectively, that are prepared using the scan data of Fig. 5 and first and second scale factors;
Figs. 7a and 7b show cross-sectional views of first and second mould patterns, respectively, that are prepared using the first and second virtual models of Figs. 6a and 6b;
Fig. 8 shows a cross-sectional view of compression mould apparatus, including first and second compression moulds, prepared using the first and second mould patterns of Figs. 7a and 7b;
Fig. 9 shows an oblique view of mould apparatus formed using the method of Fig. 1;
Fig. 10 shows a flow-chart of steps carried out in a method of forming multiple prosthetic tooth elements and multiple first and second dental prosthesis;
Fig. 11 shows a cross-sectional side view of the compression mould apparatus of Fig. 8 used in the method of Fig. 10;
Figs. 12a and 12b show cross-sectional views of raw first and second prosthetic tooth elements formed in the method of Fig. 10 and Figs. 12c and 12d show cross-sectional views of final first and second prosthetic tooth elements formed in the method of Fig. 10;
Fig. 13 shows a cross-sectional side view of further compression mould apparatus used in the method of Fig. 10; and
Figs. 14a and 14b show cross-sectional views of first and second dental prostheses, respectively, formed in the method of Fig. 10; and
Fig. 15 shows an oblique view of a kit of dental prostheses formed using the method of Fig. 10.

### Description of Embodiments

Methods of preparing a plurality of compression moulds for moulding prosthetic tooth elements, along with, *inter alia,* methods of preparing the prosthetic tooth elements and methods of preparing dental prosthesis, according to embodiments of the present disclosure, are now described. The methods may be carried out by one or more of a dentist, dental surgeon, clinician and dental technician, or otherwise.

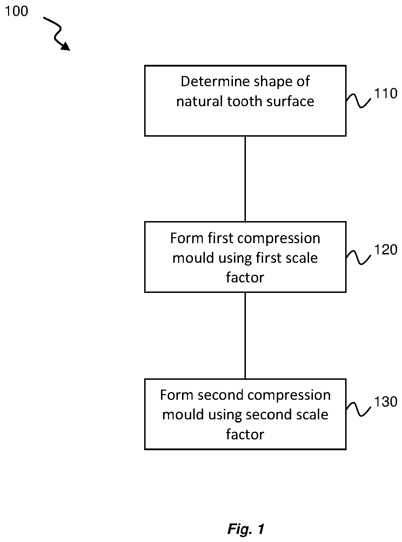

As for the general understanding of the technical field as now described with reference to the flowchart 100 of Fig. 1, a method of forming a plurality of compression moulds, for moulding prosthetic tooth elements, is provided. At 110, a shape of a natural tooth surface is determined. At 120, a first compression mould is formed, the first compression mould comprising a first mould surface, the first mould surface having a shape corresponding to a shape of the natural tooth surface increased in size by a first scale factor. At 130, a second compression mould is formed, the second compression mould comprising a second mould surface, the second mould surface having a shape corresponding to the shape of the natural tooth surface increased in size by a second scale factor, the second scale factor being different from the first scale factor.

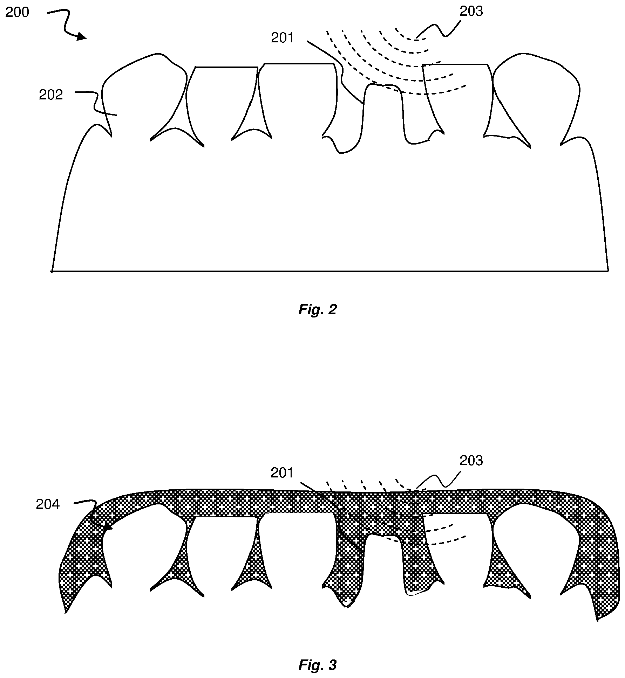

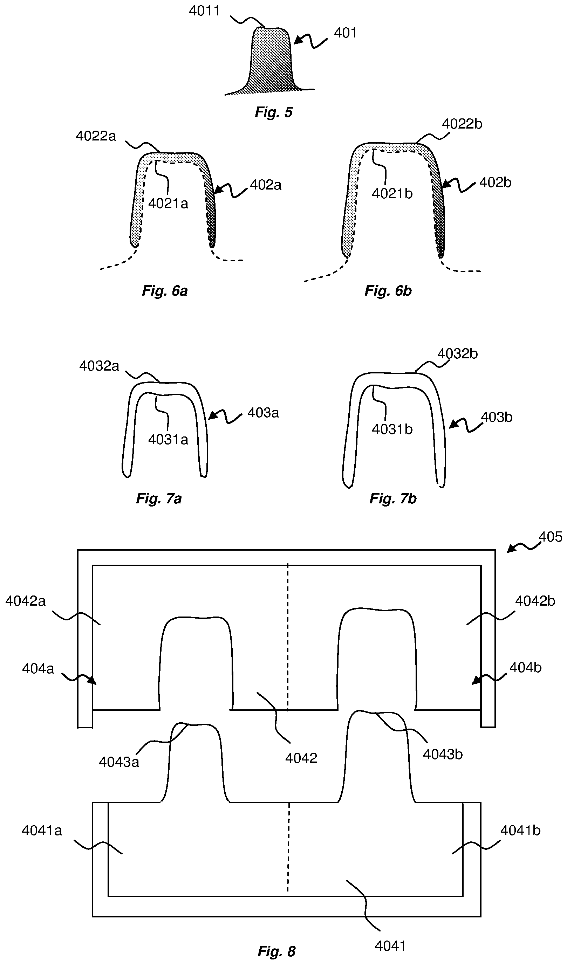

To determine the shape of the natural tooth surface, a model of the natural tooth surface can be obtained. For example, as illustrated in Fig. 2, a physical model 200 of the natural tooth surface 201, as part of a row of teeth 202, can be obtained, e.g., by making an imprint of a subject's tooth or teeth and casting the physical model 200 from the imprint. The physical 200 model is however preferably scanned, as illustrated by dotted lines 203 in Fig. 2, to obtain scan data, the scan data providing a determination of the shape of the natural tooth surface. A schematic illustration of the scan data 301 is provided in Fig. 5.

As illustrated in Fig. 3, to determine the shape of the natural tooth surface, scan data can be obtained by scanning the subject's tooth or teeth 204 directly, without forming any physical model 200.

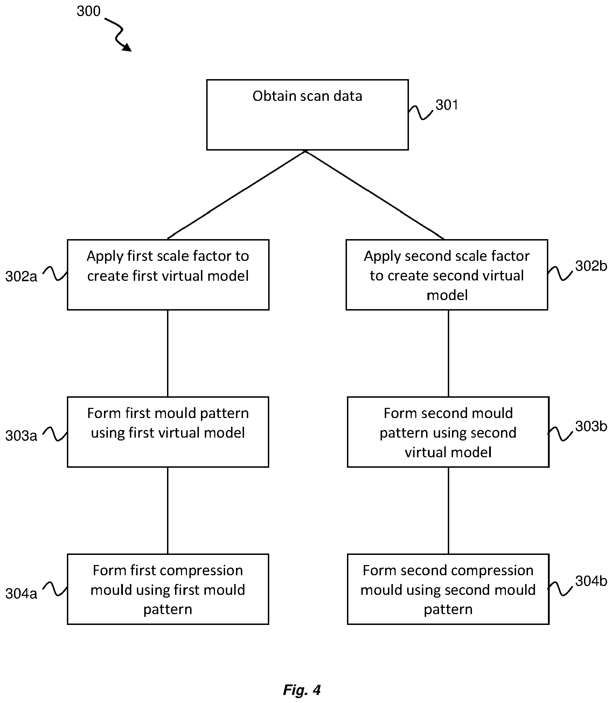

Fig. 4 shows a flow-chart 300 of further steps carried out to form the plurality of compression moulds.

At 301 of the flow-chart 300, the scan data is obtained in accordance with techniques described above. As mentioned, a schematic illustration of the scan data 301 is also provided in Fig. 5. The scan data includes data 4011 indicative of the shape and size of the natural tooth surface.

At 302a, a first virtual model is formed based on the scan data and a first scale factor. A schematic illustration of the first virtual model 402a is provided in Fig. 6a. At 302b, a second virtual model is formed based on the scan data and a second scale factor, different from the first scale factor. A schematic illustration of the second virtual model 402b is provided in Fig. 6b. Each of the virtual models 402a, 402b include inner surface data 4021a, 4021b that is based directly on the surface scan data 4011 and the first or second scale factor. Moreover, each of the virtual models 402a, 402b includes outer surface data 4022a, 4022b that is based on predetermined or inputted specifications. The specifications may indicate desired properties for a prosthetic tooth element, including a desired thickness and a desired outer surface shape.

At 303a, a first mould pattern is formed using the first virtual model 402a. A cross-sectional view of the first mould pattern 403a is provided in Fig. 7a. At 303b, a second mould pattern is formed using the second virtual model 402b. A cross-sectional view of the second mould pattern 403b is provided in Fig. 7b. Each mould pattern 403a, 403b has an inner surface 4031a, 4031b that is based on the inner surface data 4021a, 4021b of the corresponding virtual model 402a, 402b and has an outer surface 4032a, 4032b that is based on the outer surface data 4022a, 4022b of the corresponding virtual model 402a, 402b. Each inner surface 4031a, 4031b therefore has a shape that corresponds substantially to the natural tooth surface 201 illustrated in Fig. 2a, but which is increased in size by a first scale factor or a second scale factor.

At 304a, a first compression mould is formed using the first mould pattern 403a, using mould casting techniques. For example, the first compression mould may be formed by applying molten silicone material around the first mould pattern 403a, followed by hardening of the silicone material and separation from the first mould pattern 403a. A cross-sectional view of the first compression mould 404a is provided in Fig. 8 and includes a positive first mould part 4041a and a negative first mould part 4042a. At 304b, a second compression mould is formed using the second mould pattern 403b, using mould casting techniques. For example, the second compression mould may be formed by applying molten silicone material around the second mould pattern 403b, followed by hardening of the silicone material and separation from the second mould pattern 403b. A cross-sectional view of the second compression mould 404b is also provided in Fig. 8 and includes a positive second mould part 4041b and a negative second mould part 4042b. The positive first mould 4041a includes a first mould surface 4043a that has a shape corresponding to the shape of the natural tooth surface 201 increased in size by the first scale factor. The positive second mould 4041b includes a second mould surface 4043b that has a shape corresponding to a shape of the natural tooth surface 201 increased in size by the second scale factor.

Generally, it will be recognised that processing of scan data, virtual models and other features of the present disclosure may employ one or more control or processing modules for controlling one or more components of the method and may also include one or more storage elements, for storing data. The modules and storage elements can be implemented using one or more processing devices and one or more data storage units, which modules and/or storage devices may be at one location or distributed across multiple locations and interconnected by one or more communication links.

The modules can be implemented by a computer program or program code comprising program instructions. The computer program instructions can include source code, object code, machine code or any other stored data that is operable to cause the controller to perform the steps described. The computer program can be written in any form of programming language, including compiled or interpreted languages and can be deployed in any form, including as a stand-alone program or as a module, component, subroutine or other unit suitable for use in a computing environment. The data storage device(s) may include suitable computer readable media such as volatile (e.g., RAM) and/or non-volatile (e.g., ROM, disk) memory or otherwise.

Each compression mould 404a, 404b, including the first and second mould surfaces 4043a, 4043b is formed at least partially from flexible polymeric material. Therefore, when pressure is applied to the mould, vibration or other types of relative motion can occur at the interface between the ceramic and the mould, introducing irregularities and therefore roughness in the surface of the prosthetic tooth element. The roughened surface may provide a favourable surface for bonding of the veneer as described below.

The first and second compression moulds are comprised in a single mould apparatus 405. The first and second positive mould parts 4041a, 4041b are integrated with each other in a first mould section 4041, and the first and second negative mould parts 4042a, 4042b are integrated with each other in a second mould section 4042. The single mould apparatus 405 can therefore be used to form multiple prosthetic tooth components at the same time by pressing the first and second mould sections 4041, 4042 together. Nevertheless, the first and second compression moulds may be formed separately and operated independently.

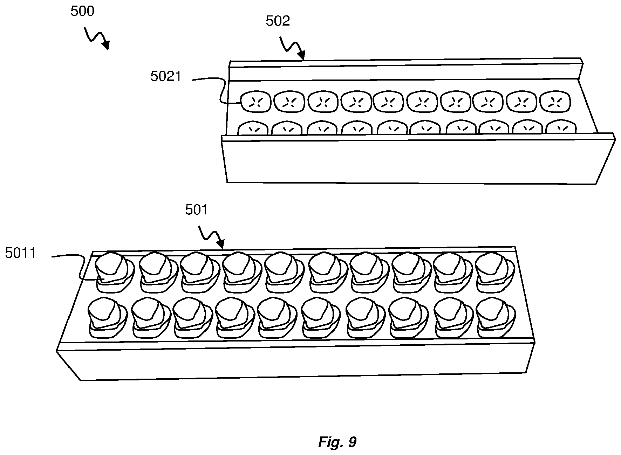

While the forming of first and second compression moulds only is described above, more than two compression moulds, and therefore more than two differently sized prosthetic tooth elements and/or dental prostheses, may be formed using the method. For example, third and optionally further compression moulds can be formed using the method, but employing different scale factors from the first and second scale factors. Moreover, when third or further compression moulds are formed, they may also be combined or integrated with the first and second compression moulds, e.g., into a single mould apparatus, according to the approach described above. An example of mould apparatus 500 comprising a plurality of compression moulds is illustrated in Fig. 9. As can be seen, first and second mould sections 501, 502 include a plurality of positive mould parts 5011 and a plurality of negative mould parts 5021, respectively, each of different sizes in accordance with different scale factors.

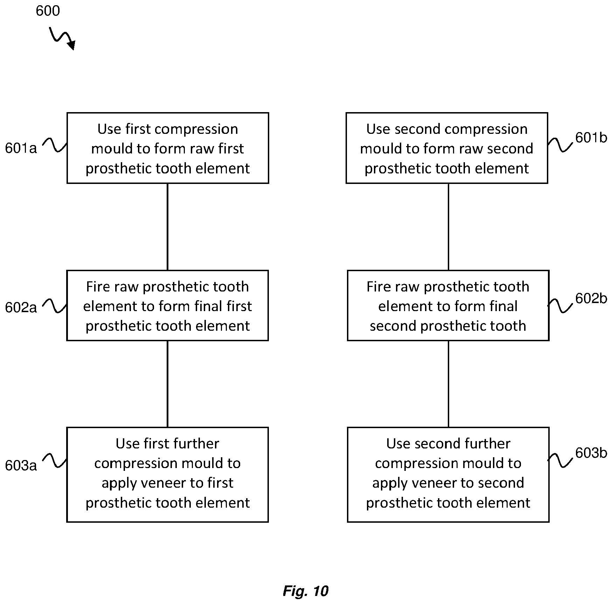

In the flowchart 600 of Fig. 10, a method of forming prosthetic tooth elements from ceramic material using the first and second compression moulds is now described.

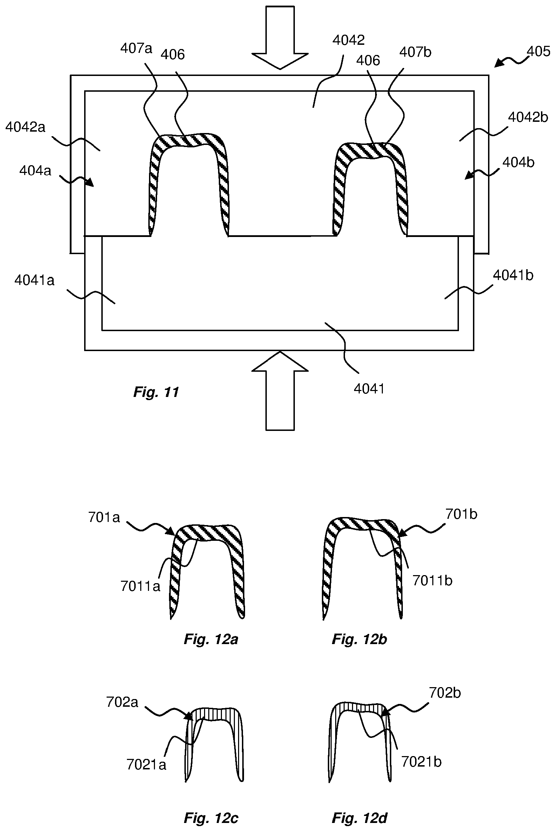

At 601a, the first compression mould is used to form a raw first prosthetic tooth element. At 601b, the second compression mould is used to form a raw second prosthetic tooth element. A cross-sectional view of the first and second compression moulds 404a, 404b when used to form the raw first and second prosthetic tooth elements is provided in Fig. 11. Ceramic material 406 is located in a first cavity 407a formed between the first positive mould part 4041a and the first negative mould part 4042a, of the first mould 404a, when the first and second mould sections 4041, 4042 are brought together. Moreover, ceramic material 406 is also located in a second cavity 407b formed between the second positive mould part 4041b and the second negative mould part 4042b, of the second mould 404b, when the first and second mould sections 4041, 4042 are brought together. The first and second cavities 407a, 407b correspond in shape to the respective first and second mould patterns 403a, 403b that are used to form the first and second moulds 404a, 404b. High pressure is applied to the first and second mould sections 4041, 4042 to compress the ceramic material 406 and form, simultaneously, a raw first prosthetic tooth element and a raw second prosthetic tooth element. A cross-sectional view of the raw first prosthetic tooth element 701a is illustrated in Fig. 12a. A cross-sectional view of the raw second prosthetic tooth element 701b is illustrated in Fig. 12b. The ceramic material 406 may comprise zirconia, zirconia-oxide, aluminium oxide or other materials usable as dental ceramics.

Referring back to the flow chart 600 of Fig. 10, at 602a, the raw first prosthetic tooth element 701a is fired to permanently harden and fix the ceramic material in its final state. A cross-sectional view of the final first prosthetic tooth element 702a after firing is illustrated in Fig. 12c. At 602b, the raw second prosthetic tooth element 701b is fired to permanently harden and fix the ceramic material in its final state. A cross-sectional view of the final second prosthetic tooth element 702b after firing is illustrated in Fig. 12d.

The raw first prosthetic tooth element 701a includes a first prosthetic surface 7011a that corresponds to the shape of the first mould surface 4043a and the second prosthetic tooth element comprise a second prosthetic surface 7011b, that corresponds to the shape of the second mould surface 4043b.

As is intended to be represented by the illustrated relative sizes of the raw prosthetic tooth elements 701a, 701b and the fired prosthetic tooth elements 702a, 702b, each prosthetic tooth element decreases in size during the firing process, as a result of material shrinkage. The provision of the compression moulds with mould surfaces that are increased in size in comparison to the natural tooth surface can therefore compensate, at least partially, for the decrease in size of the prosthetic tooth element that occurs during the firing process.

The first scale factor is selected to match a scale factor by which the prosthetic surface 7011a decreases in size during the forming of the first prosthetic tooth element 702a. Accordingly. the first prosthetic tooth element 702a can be formed to have a prosthetic tooth surface 7021a that is substantially identical in shape and size to the natural tooth surface 201. On the other hand, the second scale factor is different from the first scale factor and will therefore not match the scale factor by which the second prosthetic surface 7011b decreases in size during the forming of the second prosthetic tooth element. Thus, in addition to providing a degree of compensation for size reduction during forming, the second scale factor provides for a second prosthetic tooth element 702b with a differently sized prosthetic tooth surface 7021b to the natural tooth surface 201. Therefore, prosthetic tooth elements 702a, 702b can be formed to have a prosthetic tooth surface 7021a, 7021b that is an intentionally smaller reproduction or an intentionally larger reproduction of the natural tooth surface 201.

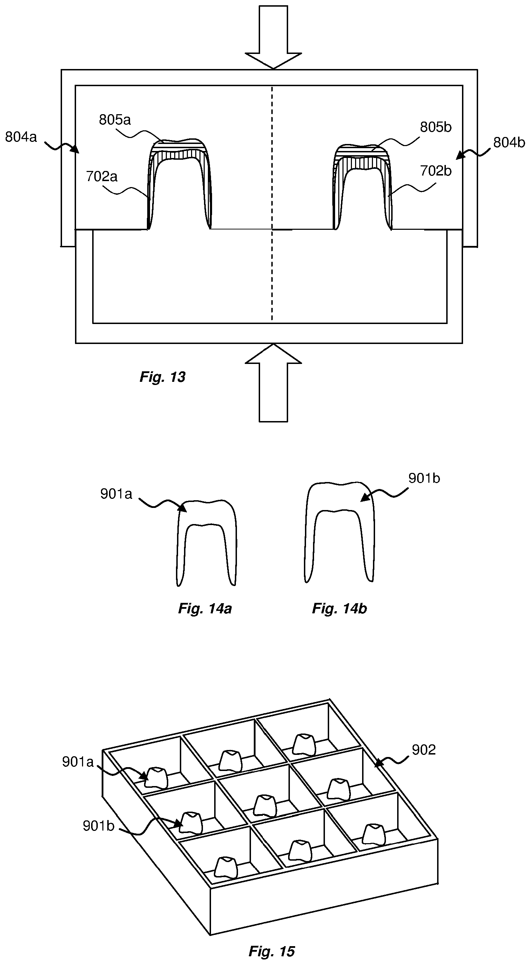

Referring back to the flow chart 600 of Fig. 10, at 603a, a first dental prosthesis is formed by applying a veneer to the first prosthetic tooth element 702a using a first further compression mould. At 603b, a second dental prosthesis is formed by applying a veneer to the second prosthetic tooth element 702b using a second further compression mould. Further first and second compression moulds 804a, 804b for applying the veneers to the first and second prosthetic tooth elements 702a, 702b are illustrated in Fig. 13, and take a very similar form to the moulds 404a, 404b of Figs. 6 and 11, but include additional cavity space for receiving porcelain veneer material 805a, 805b. High pressure is applied to the compression moulds 804a, 804b to apply the veneer 805a, 805b to the first and second prosthetic tooth elements 702a, 702b, resulting in the formation of first and second dental prosthesis 901a, 901b as illustrated in Figs. 14a and 14b, respectively. The veneer material may comprise zirconia, zirconia-oxide, aluminium oxide or other materials usable as dental ceramics.

The method described herein may be used to form a kit 902 of differently-sized prosthetic tooth elements or of differently sized dental prostheses, as represented in Fig. 15, for example. The provision of differently-sized prosthetic tooth elements or dental prostheses can provide flexibility to a dentist or clinician to select a prosthetic tooth element or dental prostheses of appropriate configuration for the patient. This may be particularly advantageous if the natural tooth surface on the basis of which the above described mould forming/moulding methods are carried out is not a natural tooth surface belonging to the patient. Nonetheless, even when the natural tooth surface does belong to the patient, the opportunity for the dentist or clinician to select from a plurality of differently-sized prosthetic tooth elements or differently-sized dental prostheses can still be advantageous, e.g., it may help accommodate for manufacturing tolerances and preferred dental practices.

## Claims

1. A method of forming a plurality of compression moulds for moulding prosthetic tooth elements comprising:
scanning a natural tooth surface (201) or a model of the natural tooth surface (201) to obtain scan data (301); and
based on the scan data (301), forming a first compression mould (404a) comprising a first mould surface (4043a), the first mould surface (4043a) having a shape corresponding to a shape of a natural tooth surface (201) increased in size by a first scale factor;
**characterised in that** the method further comprises:
based on the scan data (301), forming a second compression mould (404b) comprising a second mould surface (4043b), the second mould surface (4043b) having a shape corresponding to the shape of the natural tooth surf ace (201) increased in size by a second scale factor, the second scale factor being different from the first scale factor.

2. The method of claim 1, wherein the first compression mould (404a) comprises a positive first mould part (4041a) and a negative first mould part (4042a), the first mould surface (4043a) being provided on one of the positive and negative first mould parts (4041a, 4042a), and wherein the second compression mould ( 404b) comprises a positive second mould part ( 4041 b) and a negative second mould part ( 4042b ), the second mould surface ( 4043b) being provided on one of the positive and negative second mould parts ( 4041 b, 4042b).

3. The method of claim 2, wherein one of the positive and negative first mould parts (4041a, 4042a) is integrated with one of the positive and negative second mould parts (4041b, 4042b) in a first mould section ( 4041) and the other one of the positive and negative first mould parts (4041a, 4042a) is integrated with the other one of the positive and negative second mould parts ( 4041 b, 4042b) in a second mould section ( 4042).

4. The method of any one of the preceding claims, wherein the scan data (301) is obtained by scanning the model and wherein the model is a physical model (200) produced by obtaining an imprint of a subject's tooth or teeth (204) and casting the physical model (200) from the imprint.

5. The method of any one of the preceding claims , wherein the first compression mould ( 404a) is formed on the basis of a first virtual model ( 402a) that is created based on the scan data (301) and the first scale factor, and the second compression mould (404b) is formed on the basis of a second virtual model ( 402b) that is created based on the scan data (301) and the second scale factor.

6. The method of any one of the preceding claims, comprising forming first and second mould patterns ( 403a, 403b) on the basis of the respective first and second virtual models ( 402a, 402b ), the first and second compression moulds ( 404a, 404b) being formed using the first and second mould patterns ( 403a, 403b ).

7. A method of forming a plurality of prosthetic tooth elements or dental prostheses, comprising:
obtaining first and second compression moulds ( 404a, 404b) using the method of claim 1, the first compression mould ( 404a) comprising a first mould surface ( 4043a), the first mould surface ( 4043a) having a shape corresponding to a shape of a natural tooth surface (201) increased in size by a first scale factor, and the second compression mould ( 404b) comprising a second mould surface (4043b), the second mould surface (4043b) having a shape corresponding to the shape of the natural tooth surface (201) increased in size by a second scale factor, the second scale factor being different from the first scale factor; forming a first prosthetic tooth element (702a) from ceramic material using the first compression mould (404a), the first prosthetic tooth element (702a) comprising a first prosthetic surface (701 la) corresponding to the shape of the first mould surface (4043a); and forming a second prosthetic tooth element (702b) from ceramic material using the second compression mould ( 404b ), the second prosthetic tooth element (702b) comprising a second prosthetic surface (7011 b) corresponding to the shape of the second mould surface (4043b).

8. The method of claim 7, wherein the forming of the first and second prosthetic tooth elements (702a, 702b) includes providing the first and second prosthetic tooth elements in a raw first state (701a, 701b) and firing the first and second prosthetic tooth elements (701a, 701b) to provide the first and second prosthetic tooth elements in a second state (702a, 702b) wherein, during the firing process the first and second prosthetic tooth elements (701a, 701b) decrease in size.

9. The method of claim 8, wherein the first scale factor substantially matches a scale factor by which the first prosthetic surface (701 la) decreases in size during the forming of the first prosthetic tooth element (702a).

10. The method of claim 8, wherein the first scale factor does not match the scale factor by which the first prosthetic surface (701 la) decreases in size during the forming of the first prosthetic tooth element (702a).

11. The method of claim 9 or 10, wherein the second scale factor does not match the seal e factor by which the second prosthetic surface (7011 b) decreases in size during the forming of the second prosthetic tooth element (702b ).

12. The method of any one of claims 7 to 11, comprising:
forming a first dental prosthesis (901a) by applying a veneer (805a) to the first prosthetic tooth element (702a); and
forming a second dental prosthesis (901 b) by applying a veneer (805b) to the second prosthetic tooth element (702b ).

13. The method of claim 12 wherein each veneer (805a, 805b) is formed on the respective prosthetic tooth element (702a, 702b) by compression moulding ceramic material on top of the respective prosthetic tooth element (702a, 702b ).

## Patentansprüche

1. Verfahren zum Bilden einer Vielzahl von Kompressionsformen zum Formen von Zahnprothesenelementen, umfassend:
Scannen einer natürlichen Zahnoberfläche (201) oder eines Modells der natürlichen Zahnoberfläche (201), um Scandaten (301) zu erhalten; und
Bilden einer ersten Kompressionsform (404a), die eine erste Formoberfläche (4043a) umfasst, wobei die erste Formoberfläche (4043a) eine Gestalt hat, die einer Gestalt einer natürlichen Zahnoberfläche (201) entspricht, deren Größe um einen ersten Skalierungsfaktor erhöht ist, basierend auf den Scandaten (301);
**dadurch gekennzeichnet, dass** das Verfahren des Weiteren umfasst:
Bilden einer zweiten Kompressionsform (404b), die eine zweite Formoberfläche (4043b) umfasst, wobei die zweite Formoberfläche (4043b) eine Gestalt hat, die der Gestalt der natürlichen Zahnoberfläche (201) entspricht, deren Größe um einen zweiten Skalierungsfaktor erhöht ist, basierend auf den Scandaten (301), wobei der zweite Skalierungsfaktor sich von dem ersten Skalierungsfaktor unterscheidet.

2. Verfahren nach Anspruch 1, wobei die erste Kompressionsform (404a) ein positives erstes Formteil (4041a) und ein negatives erstes Formteil (4042a) umfasst, wobei die erste Formoberfläche (4043a) auf einem von dem positiven und dem negativen ersten Formteil (4041a, 4042b) bereitgestellt wird, und wobei die zweite Kompressionsform (404b) ein positives zweites Formteil (4041b) und ein negatives zweites Formteil (4042b) umfasst, wobei die zweite Formoberfläche (4043b) auf einem von dem positiven und negativen zweiten Formteil (4041b, 4042b) bereitgestellt wird.

3. Verfahren nach Anspruch 2, wobei eines von dem positiven und dem negativen ersten Formteil (4041a, 4042a) in eines von dem positiven und dem negati-ven zweiten Formteil (4041b, 4042b) in einem ers-ten Formabschnitt (4041) integriert ist, und das andere von dem positiven und dem negativen ersten Formteil (4041a, 4042a) in das andere von dem po-sitiven und dem negativen zweiten Formteil (4041b, 4042b) in einem zweiten Formabschnitt (4042) integriert ist.

4. Verfahren nach einem der vorhergehenden Ansprüche, wobei die Scandaten (301) durch Scannen des Modells erhalten werden, und wobei das Modell ein physisches Modell (200) ist, das durch Erhalten eines Abdrucks eines Zahns oder von Zähnen (204) eines Subjekts und Gießen des physischen Modells (200) aus dem Abdruck produziert wird.

5. Verfahren nach einem der vorhergehenden Ansprüche, wobei die erste Kompressionsform (404a) basierend auf einem ersten virtuellen Modell (402a) gebildet ist, das basierend auf den Scandaten (301) und dem ersten Skalierungsfaktor erstellt wird, und die zweite Kompressionsform (404b) basierend auf einem zweiten virtuellen Modell (402b) gebildet wird, das basierend auf den Scandaten (301) und dem zweiten Skalierungsfaktor erstellt wird.

6. Verfahren nach einem der vorhergehenden Ansprüche, umfassend Bilden von ersten und zweiten Formmustern (403a, 403b) basierend auf dem jeweiligen ersten und zweiten virtuellen Modell (402a, 402b), wobei die erste und die zweite Kompressionsform (404a, 404b) unter Verwendung des ersten und des zweiten Formmusters (403a, 403b) gebildet werden.

7. Verfahren zum Bilden einer Vielzahl von Zahnprothesenelementen oder Zahnersatz, umfassend:
Erhalten von ersten und zweiten Kompressionsformen (404a, 404b) unter Verwendung des Verfahrens gemäß Anspruch 1, wobei die erste Kompressionsform (404a) eine erste Formoberfläche (4043a) umfasst, die erste Formoberfläche (4043a) eine Gestalt hat, die einer Gestalt einer natürlichen Zahnoberfläche (201) entspricht, deren Größe um einen ersten Skalierungsfaktor erhöht ist, und die zweite Kompressionsform (404b) eine zweite Formoberfläche (4043b) umfasst, wobei die zweite Formoberfläche (4043b) eine Gestalt hat, die der Gestalt der natürlichen Zahnoberfläche (201) entspricht, deren Größe um einen zweiten Skalierungsfaktor erhöht ist, wobei der zweite Skalierungsfaktor sich von dem ersten Skalierungsfaktor unterscheidet;
Bilden eines ersten Zahnprothesenelements (702a) aus Keramikmaterial unter Verwendung der ersten Kompressionsform (404a), wobei das erste Zahnprothesenelement (702a) eine erste Prothesenoberfläche (7011a) umfasst, die der Gestalt der ersten Formoberfläche (4043a) entspricht; und
Bilden eines zweiten Zahnprothesenelements (702b) aus Keramikmaterial unter Verwendung der zweiten Kompressionsform (404b), wobei das zweite Zahnprothesenelement (702b) eine zweite Prothesenoberfläche (7011b) umfasst, die der Gestalt der zweiten Formoberfläche (4043b) entspricht.

8. Verfahren nach Anspruch 7, wobei das Bilden des ersten und des zweiten Zahnprothesenelements (702a, 702b) Bereitstellen des ersten und des zweiten Zahnprothesenelements in einem rohen ersten Zustand (701a, 701b) und Brennen des ersten und des zweiten Zahnprothesenelements (701a, 701b) einschließt, um das erste und das zweite Zahnprothesenelement in einem zweiten Zustand (702a, 702b) bereitzustellen, wobei die Größe des ersten und des zweiten Zahnprothesenelements (701a, 701b) während des Brennprozesses abnimmt.

9. Verfahren nach Anspruch 8, wobei der erste Skalierungsfaktor im Wesentlichen einem Skalierungsfaktor entspricht, um den die Größe der ersten Prothesenoberfläche (7011a) während des Bildens des ersten Zahnprothesenelements (702a) abnimmt.

10. Verfahren nach Anspruch 8, wobei der erste Skalierungsfaktor nicht dem Skalierungsfaktor entspricht, um den die Größe der ersten Prothesenoberfläche (7011a) während des Bildens des ersten Zahnprothesenelements (702a) abnimmt.

11. Verfahren nach Anspruch 9 oder 10, wobei der zweite Skalierungsfaktor nicht dem Skalierungsfaktor entspricht, um den die Größe der zweiten Prothesenoberfläche (7011b) während des Bildens des zweiten Zahnprothesenelements (702b) abnimmt.

12. Verfahren nach einem der Ansprüche 7 bis 11, umfassend:
Bilden eines ersten Zahnersatzes (901a) durch Aufbringen eines Veneers (805a) auf das erste Zahnprothesenelements (702a); und
Bilden eines zweiten Zahnersatzes (901b) durch Aufbringen eines Veneers (805b) auf das zweite Zahnprothesenelements (702b).

13. Verfahren nach Anspruch 12, wobei jedes Veneer (805a, 805b) auf dem jeweiligen Zahnprothesenelement (702a, 702b) durch Kompressionsformen von Keramikmaterial oben auf das jeweilige Zahnprothesenelement (702a, 702b) gebildet wird.

## Revendications

1. Procédé de formation d'une pluralité de moules de compression pour le moulage d'éléments de dents prothétiques comprenant :
le balayage d'une surface de dent naturelle (201) ou d'un modèle de la surface de dent naturelle (201) pour obtenir des données de balayage (301) ; et
sur la base des données de balayage (301), la formation d'un premier moule de compression (404a) comprenant une première surface de moule (4043a), la première surface de moule (4043a) ayant une forme correspondant à une forme d'une surface de dent naturelle (201) augmentée en taille par un premier facteur d'échelle ;
**caractérisé en ce que** le procédé comprend en outre :
sur la base des données de balayage (301), la formation d'un second moule de compression (404b) comprenant une seconde surface de moule (4043b), la seconde surface de moule (4043b) ayant une forme correspondant à la forme de la surface de dent naturelle (201) augmentée en taille par un second facteur d'échelle, le second facteur d'échelle étant différent du premier facteur d'échelle.

2. Procédé selon la revendication 1, le premier moule de compression (404a) comprenant une première partie de moule positive (4041a) et une première partie de moule négative (4042a), la première surface de moule (4043a) étant prévue sur l'une des premières parties de moule positive et négative (4041a, 4042a), et le second moule de compression (404b) comprenant une seconde partie de moule positive (4041b) et une seconde partie de moule négative (4042b), la seconde surface de moule (4043b) étant prévue sur l'une des secondes parties de moule positives et négatives (4041b, 4042b).

3. Procédé selon la revendication 2, l'une des premières parties de moule positives et négatives (4041a, 4042a) étant intégrée à l'une des secondes parties de moule positives et négatives (4041b, 4042b) dans une première section de moule (4041) et l'autre des premières parties de moule positives et négatives (4041a, 4042a) étant intégrée à l'autre des secondes parties de moule positives et négatives (4041b, 4042b) dans une seconde section de moule (4042).

4. Procédé selon l'une quelconque des revendications précédentes, les données de balayage (301) étant obtenues par balayage du modèle et le modèle étant un modèle physique (200) produit par l'obtention d'une empreinte de la dent ou des dents d'un sujet (204) et le moulage du modèle physique (200) à partir de l'empreinte.

5. Procédé selon l'une quelconque des revendications précédentes, le premier moule de compression (404a) étant formé sur la base d'un premier modèle virtuel (402a) qui est créé sur la base des données de balayage (301) et du premier facteur d'échelle, et le second moule de compression (404b) étant formé sur la base d'un second modèle virtuel (402b) qui est créé sur la base des données de balayage (301) et du second facteur d'échelle.

6. Procédé selon l'une quelconque des revendications précédentes, comprenant la formation de premier et second modèles de moule (403a, 403b) sur la base des premier et second modèles virtuels respectifs (402a, 402b), les premier et second moules de compression (404a, 404b) étant formés à l'aide des premier et second modèles de moule (403a, 403b).

7. Procédé de formation d'une pluralité d'éléments de dents prothétiques ou de prothèses dentaires, comprenant :
l'obtention de premier et second moules de compression (404a, 404b) à l'aide du procédé selon la revendication 1, le premier moule de compression (404a) comprenant une première surface de moule (4043a), la première surface de moule (4043a) ayant une forme correspondant à une forme d'une surface de dent naturelle (201) augmentée en taille par un premier facteur d'échelle, et le second moule de compression (404b) comprenant une seconde surface de moule (4043b), la seconde surface de moule (4043b) ayant une forme correspondant à la forme de la surface de dent naturelle (201) augmentée en taille par un second facteur d'échelle, le second facteur d'échelle étant différent du premier facteur d'échelle ;
la formation d'un premier élément de dent prothétique (702a) en matériau céramique à l'aide du premier moule de compression (404a), le premier élément de dent prothétique (702a) comprenant une première surface prothétique (7011a) correspondant à la forme de la première surface de moule (4043a), et
la formation d'un second élément de dent prothétique (702b) en matériau céramique à l'aide du second moule de compression (404b), le second élément de dent prothétique (702b) comprenant une seconde surface prothétique (7011b) correspondant à la forme de la seconde surface de moule (4043b).

8. Procédé selon la revendication 7, la formation des premier et second éléments de dent prothétique (702a, 702b) comprenant la fourniture des premier et second éléments de dent prothétique dans un premier état brut (701a, 701b) et la cuisson des premier et second éléments de dent prothétique (701a, 701b) pour fournir les premier et second éléments de dent prothétique dans un second état (702a, 702b).
au cours du processus de cuisson, les premier et second éléments de dent prothétique (701a, 701b) diminuant en taille.

9. Procédé selon la revendication 8, le premier facteur d'échelle correspondant sensiblement à un facteur d'échelle par lequel la première surface prothétique (7011a) diminue en taille pendant la formation du premier élément de dent prothétique (702a).

10. Procédé selon la revendication 8, le premier facteur d'échelle ne correspondant pas au facteur d'échelle par lequel la première surface prothétique (7011a) diminue en taille pendant la formation du premier élément de dent prothétique (702a),

11. Procédé selon la revendication 9 ou 10, le second facteur d'échelle ne correspondant pas au facteur d'échelle par lequel la seconde surface prothétique (7011b) diminue en taille pendant la formation du second élément de dent prothétique (702b).

12. Procédé selon l'une quelconque des revendications 7 à 11, comprenant :
la formation d'une première prothèse dentaire (901a) en appliquant une facette (805a) au premier élément de dent prothétique (702a) ; et
la formation d'une seconde prothèse dentaire (901b) en appliquant une facette (805b) au second élément de dent prothétique (702b).

13. Procédé selon la revendication 12 chaque facette (805a, 805b) étant formée sur l'élément de dent prothétique respectif (702a, 702b) par moulage par compression d'un matériau céramique sur le dessus de l'élément de dent prothétique respectif (702a, 702b).
